# EUROPÄISCHE PATENTSCHRIFT

(11) **EP 4 003 586 B1**
(45) Veröffentlichungstag und Bekanntmachung des Hinweises auf die Patenterteilung: **18.12.2024**
(21) Anmeldenummer: 20750216.2
(22) Anmeldetag: 29.07.2020
(51) Int. Cl.: B01J 20/04, B01J 20/28, B01J 20/30, C02F 1/28

(54) **FILTERMATERIAL ZUR WASSERAUFBEREITUNG**
FILTER MATERIAL FOR WATER TREATMENT
MATÉRIAU FILTRANT POUR LE TRAITEMENT DE L'EAU

(30) Priorität: 31.07.2019 DE 102019120629
(43) Veröffentlichungstag der Anmeldung: 01.06.2022
(73) Patentinhaber: Lhoist Recherche et Développement S.A., 1342 Ottignies-Louvain-la-Neuve (BE)
(72) Erfinder: VEDDER, Heidrun, 53945 Blankenheim (DE)
(74) Vertreter: Cohausz & Florack
(86) Internationale Anmeldenummer: PCT/EP2020/071354
(87) Internationale Veröffentlichungsnummer: WO 2021/018942

(56) Entgegenhaltungen:
- CN-A- 104 478 260
- JP-A- 2003 251 371
- US-B1- 6 322 705

## Beschreibung

Die Erfindung betrifft ein erstes Filtermaterial zur Wasseraufbereitung, ein zweites Filtermaterial zur Wasseraufbereitung, ein Verfahren zur Herstellung des Filtermaterials, einen Filter umfassend ein Filtermaterial, die Verwendung eines Filtermaterials und ein Wasseraufbereitungsverfahren.

Bei der Aufbereitung von Trinkwasser werden Filtermaterialien zur Entsäuerung des Wassers eingesetzt, die üblicherweise mineralische Bestandteile enthalten. Von besonderer Bedeutung sind hierbei Filtermaterialien, die Calciumcarbonat und/oder Magnesiumoxid enthalten. Zu dieser Gruppe von Filtermaterialien gehört auch halbgebrannter Dolomit, der sich beim Brennen von Dolomit bildet.

Halbgebrannter Dolomit besteht größtenteils aus Calciumcarbonat und Magnesiumoxid. Granulate aus halbgebrannten Dolomit weisen besonders gute Entsäuerungseigenschaften bei der Wasseraufbereitung von Trinkwasser auf. Während Granulate auf Basis von Calciumcarbonat für bestimmte Anwendungen bei der Wasseraufbereitung nicht reaktiv genug sind, können Granulate auf Basis von Magnesiumoxid für einige Anwendungen zu reaktiv sein, mit der Folge, dass der pH-Wert des Wassers einen für Trinkwasser akzeptablen Wert übersteigt. Granulate aus halbgebranntem Dolomit hingegen weisen ein hervorragendes Reaktivitätsprofil auf, welches aus der vorteilhaften Wechselwirkung der verschiedenen Bestandteile resultiert.

Zudem erfüllen Filtermaterialien aus halbgebranntem Dolomit auch die hohen Sicherheits- und Qualitätsanforderungen, die bei der Trinkwasseraufbereitung erfüllt werden müssen. Diese Anforderungen sind in der "Verordnung über die Qualität von Wasser für den menschlichen Gebrauch (Trinkwasserverordnung - TrinkwV)" geregelt. Gemäß der Trinkwasserverordnung sind nur wenige Stoffe für die Entsäuerung und Einstellung des pH-Werts von Trinkwasser zugelassen.

Ein Nachteil von Granulaten aus halbgebranntem Dolomit ist allerdings, dass diese in komplizierten, zeit- und energieaufwendigen Herstellungsprozessen aus Dolomitstein hergestellt werden müssen. Für die Verarbeitung wird gemahlener halbgebrannter Dolomit mit Dolomithydrat gemischt, granuliert und recarbonatisiert. Die Herstellung von Granulaten aus halbgebranntem Dolomit stellt somit ein umfangreiches sowie zeit-, arbeits-, und energieintensives Verfahren dar.

Ein weiterer Nachteil von Granulaten aus halbgebranntem Dolomit besteht darin, dass ein weiteres "fine-tuning" bei der pH-Wert Einstellung des Wassers nicht auf einfachem Weg möglich ist. Das Verhältnis von Magnesiumoxid zu Calciumcarbonat ist im Rohdolomit bereits vorgegeben. Eine weitere Zugabe von Magnesiumoxid und/oder Calciumcarbonat im Herstellungsverfahren des halbgebrannten Dolomits muss genau abgestimmt werden, da auf diese Weise das Granulierverhalten des Materials negativ beeinflusst werden kann.

Andere Filtermaterialien, die Calciumcarbonat und Magnesiumoxid umfassen, sind bereits bekannt. Allerdings weisen diese nicht die hervorragenden Entsäuerungseigenschaften von halbgebranntem Dolomit auf.

Die DE 1 592 133 A1 beschreibt beispielsweise ein körniges Filtermaterial zum Entsäuern von Wasser, welches überwiegend aus Calciumverbindungen besteht, wobei der Kern des Filterkorns im Wesentlichen aus Calciumhydroxid und die Schale im Wesentlichen aus porösem Calciumcarbonat besteht. Der Kern des Filterkorns kann zudem Magnesiumoxid enthalten. Aufgrund des relativ hohen Anteils an Calciumhydroxid weist das körnige Filtermaterial gemäß der DE 1 592 133 A1 ein von dem Reaktivitätsprofil von halbgebranntem Dolomit abweichendes Entsäuerungsverhalten auf. Auch US 6 322 705 B1 beschreibt ein mehrlagiges Filtermaterial zur Wasserentsäuerung.

Folglich gibt es weiterhin einen Bedarf an neuen Filtermaterialien, die ähnlich hervorragende Entsäuerungseigenschaften bei der Trinkwasseraufbereitung aufweisen wie Granulate aus halbgebranntem Dolomit. Zudem müssten solche Filtermaterialien sicherstellen, dass das aufbereitete Wasser den hohen Anforderungen der Trinkwasserverordnung genügt.

Die vorliegende Erfindung stellt sich folglich die Aufgabe, ein Filtermaterial bereitzustellen, welches sich zur Aufbereitung von Trinkwasser eignet. Das Filtermaterial soll ähnliche Entsäuerungseigenschaften aufweisen wie Granulate aus halbgebranntem Dolomit.

Zudem stellt sich die Erfindung zur Aufgabe, ein Filtermaterial bereitzustellen, mit dem Wasser so aufbereitet werden kann, dass es die hohen Qualitätsanforderungen der Trinkwasserverordnung erfüllt. Insbesondere stellt sich die Erfindung zur Aufgabe, ein Filtermaterial bereitzustellen, welches bei der Wasseraufbereitung sicherstellt, dass das Wasser den pH-Grenzwert der Trinkwasserverordnung von 9,5 nicht übersteigt. Des Weiteren sollte auch das Filtermaterial die Anforderungen an Aufbereitungsstoffe aus der Trinkwasserverordnung erfüllen.

Ferner stellt sich die vorliegende Erfindung zur Aufgabe, ein Filtermaterial bereitzustellen, das auf einfache und kostengünstige Weise hergestellt werden kann.

Schließlich stellt sich die vorliegende Erfindung die Aufgabe, einen Filter bereitzustellen, mit dem eine qualitativ-hochwertige und stabile Wasserentsäuerung über mehrere Monate möglich ist.

Eine oder mehrere dieser Aufgaben werden durch die in Anspruch 1, 10 und 12 beschriebenen Erzeugnisse und durch die in Anspruch 16 beschriebene Verwendung gelöst.

Vorteilhafte Ausgestaltungen der Erfindung sind in den abhängigen Ansprüchen angegeben und werden nachfolgend im Einzelnen erläutert.

Die vorliegende Erfindung betrifft ein erstes Filtermaterial zur Wasseraufbereitung, welches ein erstes Granulat enthaltend Calciumcarbonat und ein zweites Granulat enthaltend Magnesiumoxid umfasst, wobei das erste und das zweite Granulat, jeweils unabhängig voneinander, eine Schüttdichte von 1,00 bis 1,40 t/m³ aufweisen und das Filtermaterial das erste Granulat in einer Menge von 55 bis 85 Gew.% enthält bezogen auf die Summe der Mengen von erstem und zweiten Granulat. Überraschenderweise hat sich gezeigt, dass sich ein solches Filtermaterial in hervorragender Weise zur Aufbereitung von Wasser, insbesondere von Trinkwasser, eignet. Mit dem erfindungsgemäßen Filtermaterial lässt sich der pH-Wert von Trinkwasser zudem präzise einstellen.

Das Entsäuerungsverhalten des erfindungsgemäßen Filtermaterials kommt dem von Granulaten aus halbgebranntem Dolomit sehr nahe und verhält sich auch über mehrere Wochen bei einer täglichen Laufzeit von knapp 10 Stunden stabil. Mit dem erfindungsgemäßen Filtermaterial wird eine gleichmäßige Entsäuerung des Trinkwassers gewährleistet. Mit dem erfindungsgemäßen Filtermaterial behandeltes Wasser erfüllt die Qualitätsanforderungen der Trinkwasserverordnung und überschreitet den pH-Grenzwert von 9,5 nicht. Das Filtermaterial führt bei der Wasseraufbereitung des Weiteren zu einer Enteisenung und Entmanganung und zu einer Remineralisierung des Trinkwassers, wodurch die Qualität des Trinkwassers weiter verbessert wird.

Ohne an eine bestimmte wissenschaftliche Theorie gebunden sein zu wollen, scheint sich das hervorragende Entsäuerungsverhalten des Filtermaterials auf die Wechselwirkung des ersten und zweiten Granulats zurückführen zu lassen. Dabei verhält sich das erfindungsgemäße Filtermaterial wie Granulate aus halbgebranntem Dolomit, obwohl es Granulate unterschiedlicher Art umfasst. Dieses homogene Entsäuerungsverhalten scheint insbesondere auf die entsprechende Schüttdichte des ersten und zweiten Granulats zurückzuführen zu sein. Weisen sowohl das erste als auch das zweite Granulat jeweils unabhängig voneinander eine Schüttdichte von 1,00 bis 1,40 t/m³ auf, so ergibt das Filtermaterial eine homogene Mischung beider Granulate, die sich auch über einen längeren Zeitraum unter Einwirkung von Wasser in ihrer Aufteilung nicht wesentlich verändert. Auf diese Weise kommt es zu keiner Entmischung im Filter und das Filtermaterial weist über den gesamten Filter ein stabiles Verhältnis von erstem und zweitem Granulat auf.

Granulate im Sinne der Erfindung umfassen hierbei Körner, wobei jedes Korn ein Agglomerat aus kleineren Partikeln ist. Folglich sind reine Pulver nicht Granulate im Sinne der Erfindung.

Bei einer Schüttdichte von weniger als 1,00 t/m³ für das erste und/oder zweite Granulat sind die Granulate nicht ausreichend stabil, um auch bei dem Einsatz großer Wassermengen in einer industriellen Wasseraufbereitung gleichmäßig abzureagieren. Es kann bei solchen Granulaten zu Ablösungen und Unregelmäßigkeiten kommen. Weist das erste und/oder das zweite Granulat hingegen eine Schüttdichte von mehr als 1,40 t/m³ auf, so bilden die Partikel, aus denen die Körner des Granulats geformt werden, keinen lockeren Verbund miteinander aus, sondern sind zu dicht gepackt, was zu einem instabilen Granulat führt. Auf diese Weise erhaltene Granulate sind nicht ausreichend stabil für Anwendungen in der industriellen Wasseraufbereitung von Trinkwasser und weisen nicht die erforderliche Reaktivität für den Entsäuerungsprozess auf.

Gemäß einer vorteilhaften Ausgestaltung des erfindungsgemäßen Filtermaterials weist das erste und/oder das zweite Granulat, jeweils unabhängig voneinander, eine Schüttdichte von 1,10 bis 1,38 t/m³, vorzugsweise von 1,15 bis 1,35 t/m³ oder besonders bevorzugt von 1,20 bis 1,32 t/m³, auf. Weist das erste und/oder das zweite Granulat eine solche Schüttdichte auf, lässt sich mit dem Filtermaterial eine besonders konstante pH-Einstellung von Trinkwasser erzielen.

Gemäß einer besonders bevorzugten Ausgestaltung der Erfindung weist sowohl das erste als auch das zweite Granulat eine Schüttdichte von 1,10 bis 1,38 t/m³, weiter bevorzugt von 1,15 bis 1,35 t/m³ oder besonders bevorzugt von 1,20 bis 1,32 t/m³, auf. Je ähnlicher sich die Schüttdichten des ersten und zweiten Granulats des Filtermaterials sind, desto gleichmäßiger und stabiler ist die Wirkungsweise des Filtermaterials bei der Wasseraufbereitung. Besonders bevorzugt liegt die Schüttdichte des ersten Granulats höchstens 20 %, insbesondere höchstens 10 % oder höchstens 5 % über oder unter der Schüttdichte des zweiten Granulats, bezogen auf den Wert der Schüttdichte des ersten und zweiten Granulats in t/m³. Das bedeutet, dass beispielsweise bei einer Abweichung der Schüttdichten des ersten und zweiten Granulats von höchstens 10 % und wobei das zweite Granulat eine Schüttdichte von 1,15 t/m³ aufweist, das erste Granulat eine Schüttdichte von 1,04 bis 1,26 t/m³ aufweist.

Dem Fachmann sind Verfahren zur Bestimmung der Schüttdichte bekannt. Insbesondere wird die Bestimmung der Schüttdichte der erfindungsgemäßen Granulate gemäß der Norm DIN EN 12902, Abschnitt 5.2, besonders bevorzugt gemäß DIN EN 12902:2004, Abschnitt 5.2, durchgeführt. Hierbei handelt es sich bei den erfindungsgemäßen Granulaten um körniges Material im Sinne der Tabelle 1 in Abschnitt 5.2.4 der Norm DIN EN 12902:2004.

Das Entsäuerungsverhalten des erfindungsgemäßen Filtermaterials hat sich als besonders effektiv und konstant herausgestellt, weil das Filtermaterial das erste Granulat in einer Menge von 55 bis 85 Gew.%, vorzugsweise in einer Menge von 60 bis 80 Gew.%, weiter bevorzugt in einer Menge von 62 bis 75 Gew.%, bevorzugter in einer Menge von 65 bis 70 Gew.% oder besonders bevorzugt in einer Menge von 66 bis 68 Gew.%, bezogen auf die Summe der Mengen von erstem und zweitem Granulat, enthält. Enthält das Filtermaterial das erste und zweite Granulat in einem solchen Verhältnis, so entspricht das Entsäuerungsverhalten des erfindungsgemäßen Filtermaterials besonders dem von Granulaten aus halbgebranntem Dolomit. Zudem weist das Filtermaterial in diesem Fall besonders lange ein stabiles Entsäuerungsverhalten auf.

Besonders gute Ergebnisse bei der Wasseraufbereitung lassen sich erzielen, wenn das erste Granulat des Filtermaterials Calciumcarbonat in einer Menge von mindestens 90 Gew.%, vorzugsweise mindestens 93 Gew.%, bevorzugt mindestens 95 Gew.% oder besonders bevorzugt mindestens 96 Gew.%, bezogen auf das Gesamttrockengewicht des ersten Granulats, enthält. Gemäß einer besonders bevorzugten Ausführungsform der Erfindung enthält das erste Granulat Calciumcarbonat in einer Menge von in etwa 97 Gew.%, bezogen auf das Gesamttrockengewicht des ersten Granulats. Gemäß einer weiteren Ausführungsform enthält das erste Granulat Calciumcarbonat in einer Menge von mindestens 97 Gew.%, von mindestens 98 Gew.% oder von mindestens 99 Gew.%, bezogen auf das Gesamttrockengewicht des ersten Granulats. Gemäß einer weiteren besonders bevorzugten Ausführungsform der Erfindung erfüllt das erste Granulat die Reinheitskriterien für Calciumcarbonat gemäß Norm DIN EN 1018:2013, Abschnitt 5. Bei einem so hohen Anteil an Calciumcarbonat im ersten Granulat wird sichergestellt, dass die Qualität der Wasseraufbereitung über eine Vielzahl an Wasserdurchläufen stabil bleibt. Zudem weist ein Filtermaterial, bei dem das erste Granulat eine solche Menge an Calciumcarbonat enthält, ein besonders hohes Entsäuerungspotential auf. Bei einem ersten Granulat mit den genannten Calciumcarbonat-Anteilen bzw. der genannten Calciumcarbonat-Reinheit weist das aufbereitete Wasser ferner eine besonders geringe Trübung von weniger als 2 NTU, vorzugsweise weniger als 1,5 NTU oder besonders bevorzugt von weniger als 1 NTU, auf.

Gemäß einer weiteren bevorzugten Ausführungsform der Erfindung enthält das zweite Granulat des Filtermaterials Magnesiumoxid in einer Menge von mindestens 80 Gew.%, vorzugsweise von mindestens 85 Gew.% oder besonders bevorzugt von mindestens 90 Gew.%, bezogen auf das Gesamttrockengewicht des zweiten Granulats. Gemäß einer weiteren Ausführungsform der Erfindung enthält das zweite Granulat Magnesiumoxid in einer Menge von mindestens 93 Gew.%, von mindestens 95 Gew.%, von mindestens 97 Gew.%, von mindestens 98 Gew.% oder von mindestens 99 Gew.%, bezogen auf das Gesamttrockengewicht des zweiten Granulats. Gemäß einer besonders bevorzugten Ausführungsform der Erfindung weist das zweite Granulat vorzugsweise eine Reinheit an Magnesiumoxid entsprechend den Anforderungen der Norm DIN EN 16004:2012-02, Abschnitt 4 auf. Weist das zweite Granulat einen solchen Anteil an Magnesiumoxid auf, lässt sich der pH-Wert von Wasser besonders effizient einstellen. Zudem lässt sich der pH-Wert des Wassers mit einem solchen Filtermaterial auch besonders genau einstellen. Bei einem zweiten Granulat mit den genannten Magnesiumoxid-Anteilen bzw. der genannten Magnesiumoxid-Reinheit weist das aufbereitete Wasser ferner eine besonders geringe Trübung von weniger als 2 NTU, vorzugsweise weniger als 1,5 NTU oder besonders bevorzugt von weniger als 1 NTU, auf.

Methoden zur Bestimmung der Trübung einer Wasserprobe sind dem Fachmann bekannt. Die Trübung der Wasserprobe kann insbesondere mittels Nephelometrie bestimmt werden. Hierfür kann insbesondere das Verfahren gemäß Norm DIN EN ISO 7027:2000 genutzt werden.

Das erste Granulat kann neben Calciumcarbonat noch weitere Bestandteile enthalten. Hierbei hat es sich als besonders vorteilhaft herausgestellt, wenn das erste Granulat Magnesiumoxid in einer Menge von höchstens 1 Gew.%, insbesondere von höchstens 0,5 Gew.%, bezogen auf das Gesamttrockengewicht des ersten Granulats, aufweist. Enthält das erste Granulat nur diese geringen Mengen an Magnesiumoxid, kann der pH-Wert des behandelten Wassers präzise eingestellt und vorhergesagt werden. Bei deutlich höheren Mengen an Magnesiumoxid (beispielsweise über 10 Gew.%) im ersten Granulat kann es unter Umständen kurzzeitige und/oder kurzfristige Anstiege des pH-Werts geben (Peaks), die bei der Wasserverarbeitung nicht erwünscht sind.

Das erste Granulat enthält gemäß einer Ausführungsform als weitere Bestandteile Magnesiumcarbonat, vorzugsweise von 0,01 bis 2,0 Gew.%, freies Calciumoxid, vorzugsweise von 0,1 bis 2,0 Gew.%, Eisen- und Aluminiumoxid, vorzugsweise gemeinsam von 0,01 bis 0,5 Gew.%, und/oder Kieselsäure, vorzugsweise von 0,05 bis 0,5 Gew.%, jeweils bezogen auf das Gesamttrockengewicht des ersten Granulats. Granulate mit einigen oder allen dieser weiteren Bestandteile sind vergleichsweise günstig und weisen gleichzeitig eine hervorragende Wasseraufbereitungsqualität auf.

Das zweite Granulat kann neben Magnesiumoxid weitere Bestandteile enthalten. Gemäß einer Ausführungsform der Erfindung enthält hierbei das zweite Granulat Calciumcarbonat in einer Menge von höchstens 3 Gew.%, insbesondere höchstens 2 Gew.%, höchstens 1 Gew.% oder höchstens 0,5 Gew.%, bezogen auf das Gesamttrockengewicht des zweiten Granulats. Auf diese Weise wird sichergestellt, dass das zweite Granulat ein hohes Entsäuerungspotential aufweist.

Das zweite Granulat enthält gemäß einer Ausführungsform als weitere Bestandteile freies Calciumoxid, vorzugsweise von 0,1 bis 2,0 Gew.%, Eisen- und Aluminiumoxid, vorzugsweise gemeinsam von 0,1 bis 2,0 Gew.%, und/oder Kieselsäure, vorzugsweise von 0,05 bis 2,0 Gew.%, jeweils bezogen auf das Gesamttrockengewicht des zweiten Granulats. Granulate mit einigen oder allen dieser weiteren Bestandteile sind vergleichsweise günstig und weisen gleichzeitig eine hervorragende Wasseraufbereitungsqualität auf.

Soweit nicht anders beschrieben wird der Gehalt bzw. die Reinheit an Calciumcarbonat gemäß DIN 12485, insbesondere gemäß DIN EN 12485:2017-10, bestimmt.

Soweit nicht anders beschrieben wird der Gehalt an Magnesiumoxid in der Trockensubstanz insbesondere gemäß DIN EN 12485, insbesondere gemäß DIN EN 12485:2017-10, Punkt 6.9, bestimmt.

Bei der Bestimmung des Gehalts einer Substanz gemäß einer der in der Norm DIN EN 12485, insbesondere der DIN EN 12485:2017-10, aufgeführten Analyseverfahren, ist zu beachten, dass die Analyseverfahren an Material durchzuführen sind, welches nach der Bestimmung des Glühverlusts bei 550 °C erhalten wird. Bei dieser Temperatur wird beispielsweise Calciumhydroxid zu Calciumoxid umgewandelt. Ebenso wird bei dieser Temperatur Magnesiumhydroxid zu Magnesiumoxid umgewandelt. Somit wird bei der Bestimmung des Gehalts an Magnesiumoxid in der Trockensubstanz gemäß DIN EN 12485, insbesondere gemäß DIN EN 12485:2017-10, Punkt 6.9, sowohl das in dem Material vor dem Glühverlust enthaltene Magnesiumoxid als auch das Magnesiumhydroxid gleichermaßen als Magnesiumoxid in der Trockensubstanz erfasst. Magnesiumoxid in der Trockensubstanz schließt somit insbesondere in der Probe vor dem Glühverlust enthaltenes Magnesiumoxid und Magnesiumhydroxid ein. Ebenso wird bei der Bestimmung des freien Calciumoxids gemäß DIN EN 12485, insbesondere gemäß DIN EN 12485:2017-10, Punkt 6.8, sowohl das in dem Material vor dem Glühverlust enthaltene Calciumoxid als auch das Calciumhydroxid gleichermaßen als freies Calciumoxid erfasst. Freies Calciumoxid schließt somit insbesondere in der Probe vor dem Glühverlust enthaltenes Calciumoxid und Calciumhydroxid ein.

Grundsätzlich kann das erste und/oder zweite Granulat in ganz unterschiedlichen Formen vorliegen. Beispielsweise kann das erste und/oder zweite Granulat eine Zylinderform, eine Kugelform, eine Linsenform, eine rechteckige Form, eine Würfelform oder eine prismatische Form aufweisen. Ist das erste und das zweite Granulat, jeweils unabhängig voneinander, ein im Wesentlichen kugelförmiges Granulat, so kann das Filtermaterial besonders gleichmäßig und platzsparend in den Filter eingebracht werden. Zudem erfolgt der Abbau des kugelförmigen Granulats im Zuge des Entsäuerungsprozesses besonders gleichförmig, sodass das Filtermaterial auch nach längerer Wirkungsdauer noch ein gleichmäßiges und stabiles Wasseraufarbeitungsergebnis bereitstellt. Gemäß einer besonders bevorzugten Ausführungsform ist sowohl das erste als auch das zweite Granulat ein im Wesentlichen kugelförmiges Granulat.

Grundsätzlich kann die Größe des ersten Granulats für das erfindungsgemäße Filtermaterial in einem breiten Bereich liegen. Es hat sich als besonders vorteilhaft herausgestellt, wenn das erste Granulat eine Korngruppe von 0,01 bis 8 mm, vorzugsweise von 0,1 bis 6 mm, weiter bevorzugt von 0,3 bis 4 oder besonders bevorzugt von 0,5 bis 3,2 mm, mit einem Unterkornanteil von weniger als 10 Gew.%, vorzugsweise maximal 2 Gew.%, und mit einem Überkornanteil von weniger als 10 Gew.%, vorzugsweise maximal 7 Gew.%, aufweist. Weist das erste Granulat eine solche Korngruppe auf, besteht ein optimales Oberflächen-zu-Volumen-Verhältnis für die Aufbereitung von Wasser. Zudem kann das Wasser bei dieser Größe des ersten Granulats gut das Filtermaterial im Filter passieren und gleichzeitig ausreichend mit dem Granulat wechselwirken, um eine vollständige Aufbereitung des Wassers zu gewährleisten.

Die Größe des zweiten Granulats kann innerhalb eines breiten Bereichs ausgewählt werden. Als besonders geeignet für das Filtermaterial hat es sich herausgestellt, wenn das zweite Granulat eine Korngruppe von 0,01 bis 12 mm, vorzugsweise von 0,1 bis 10 mm, weiter bevorzugt von 0,2 bis 5 mm oder besonders bevorzugt von 0,5 bis 2,5 mm, mit einem Unterkornanteil von weniger als 10 Gew.%, vorzugsweise maximal 3 Gew.%, und mit einem Überkornanteil von weniger als 10 Gew.%, vorzugsweise maximal 9 Gew.%, aufweist. Bei dieser Korngruppe stellt sich das Reaktivitätsverhalten des zweiten Granulats gegenüber Wasser als besonders vorteilhaft ein. Zudem kann das Wasser bei dieser Größe des zweiten Granulats gut das Filtermaterial im Filter passieren und gleichzeitig ausreichend mit dem Granulat wechselwirken, damit eine vollständige Aufbereitung des Wassers gewährleistet wird.

Hierbei umfasst eine Korngruppe entsprechend Norm DIN EN 12901:1999 alle Korngrößen zwischen zwei Prüfsiebweiten, wobei die Korngruppe durch diese Prüfsiebweiten mit Größtkorn und Kleinstkorn beschrieben wird. Größtkorn ist hierbei die obere Prüfsiebweite bei der Untersuchung einer Korngrößenverteilung und Kleinstkorn ist die untere Prüfsiebweite bei der Untersuchung der Korngrößenverteilung. Der Überkornanteil entspricht dem Massenanteil in % (m/m) eines Korngemenges, der von dem Prüfsieb mit der größten Siebweite für die jeweilige Korngruppe zurückgehalten wird. Der Unterkornanteil entspricht dem Massenanteil in % (m/m) eines Korngemenges, der das Prüfsieb mit der kleinsten Siebweite für die jeweilige Korngruppe passiert.

Verfahren zum Messen der Korngruppe sind dem Fachmann bekannt. Die Korngruppe kann insbesondere mittels Siebexperimenten bestimmt werden.

Gemäß einer weiteren bevorzugten Ausführungsform der Erfindung weist das erfindungsgemäße Filtermaterial eine solche Reaktivität auf, dass ein Rohwasser durch Behandlung mit dem erfindungsgemäßen Filtermaterial innerhalb eines EBCT-Wertes (Empty Bed Contact Time; bei 10 °C) von weniger als 20 Minuten, bevorzugt weniger als 15 Minuten, weiter bevorzugt weniger als 12 Minuten, besonders bevorzugt weniger als 10 Minuten, soweit aufbereitet wird, dass das Wasser anschließend eine Calcitlösekapazität von weniger als 5 mg/l aufweist.

Vorzugsweise weist das Rohwasser, das durch Behandlung mit erfindungsgemäßen Formkörpern behandelt wird, eine Wassertemperatur von etwa 5 bis 15 °C, einen pH Wert von kleiner gleich 7,25, eine Basekapazität bis pH 8,2 (K_{B 8,2}) größer gleich 0,2 mmol/l und eine Säurekapazität bis pH 4,3 (Ks _{4,3}) von größer gleich 0,5 mmol/l auf. Vorzugsweise wird der angegebene EBCT Wert mit einem offenen Filter mit einer Filtermaterialschichtdicke von 1000 bis 2000 mm erreicht. Die Filtergeschwindigkeit beträgt vorteilhafterweise 10 m/h.

Die Calcitlösekapazität wird insbesondere nach der Norm DIN 38404 C 10, bevorzugt nach der Norm DIN 38404-10:2012-12 (Titel: Deutsche Einheitsverfahren zur Wasser-, Abwasser- und Schlammuntersuchung - Physikalische und physikalischchemische Stoffkenngrößen (Gruppe C) - Teil 10: Berechnung der Calcitsättigung eines Wassers (C 10)), berechnet.

Der EBCT Wert beschreibt insbesondere ein Maß für die Zeit, die ein zu behandelndes Rohwasser mit dem Behandlungsmedium in einem Behälter in Kontakt ist unter der Annahme, dass das ganze Rohwasser mit derselben Geschwindigkeit durch den Behälter fließt. Der EBCT Wert kann berechnet werden als der Quotient aus dem Volumen der Teilchen des Behandlungsmediums durch die volumetrische Flussrate.

Gemäß einer bevorzugten Ausführungsform der Erfindung besteht das erfindungsgemäße Filtermaterial im Wesentlichen aus dem ersten Granulat enthaltend Calciumcarbonat und dem zweiten Granulat enthaltend Magnesiumoxid. Wenn hier davon die Rede ist, dass das Filtermaterial im Wesentlichen aus dem ersten und dem zweiten Granulat besteht, ist damit gemeint, dass die Menge an erstem und zweitem Granulat zusammen mindestens 95 Gew.%, vorzugsweise mindestens 98 Gew.%, bezogen auf das Gesamttrockengewicht des Filtermaterials, beträgt.

Gemäß einer weiteren bevorzugten Ausführungsform der Erfindung besteht das erfindungsgemäße Filtermaterial aus dem ersten Granulat enthaltend Calciumcarbonat und dem zweiten Granulat enthaltend Magnesiumoxid.

Gemäß einer weiteren Ausführungsform der Erfindung besteht das erfindungsgemäße Filtermaterial aus einem ersten Granulat, welches im Wesentlichen aus Calciumcarbonat besteht, und einem zweiten Granulat, welches im Wesentlichen aus Magnesiumoxid besteht. Wenn hier davon die Rede ist, dass das erste Granulat im Wesentlichen aus Calciumcarbonat besteht, ist damit gemeint, dass die Menge an Calciumcarbonat im ersten Granulat mindestens 95 Gew.%, insbesondere mindestens 97 Gew.%, bevorzugter mindestens 98 Gew.% oder besonders bevorzugt mindestens 99 Gew.%, bezogen auf das Gesamttrockengewicht des ersten Granulats, beträgt. Wenn hier davon die Rede ist, dass das zweite Granulat im Wesentlichen aus Magnesiumoxid besteht, ist damit gemeint, dass die Menge an Magnesiumoxid im zweiten Granulat mindestens 95 Gew.%, insbesondere mindestens 97 Gew.%, bevorzugter mindestens 98 Gew.% oder besonders bevorzugt mindestens 99 Gew.%, bezogen auf das Gesamttrockengewicht des zweiten Granulats, beträgt. Noch bevorzugter besteht das erste und/oder zweite Granulat aus Calciumcarbonat beziehungsweise Magnesiumoxid.

Die Erfindung betrifft ferner ein zweites Filtermaterial zur Wasseraufbereitung, welches 55 bis 85 Gew.% eines ersten Granulats enthaltend Calciumcarbonat und 15 bis 45 Gew.% eines zweiten Granulats enthaltend Magnesiumoxid, jeweils bezogen auf die Summe der Mengen von erstem und zweitem Granulat, enthält. Dieses zweite Filtermaterial eignet sich hervorragend zur Aufbereitung von Wasser und verhält sich bei der Wasseraufbereitung sehr ähnlich wie Granulate aus halbgebranntem Dolomit. Gemäß einer bevorzugten Ausführungsform weisen das erste und das zweite Granulat, jeweils unabhängig voneinander, eine Schüttdichte von 1,00 bis 1,40 t/m³ auf. Bei einer solchen Schüttdichte kommt es beim zweiten Filtermaterial insbesondere zu keinerlei Entmischungseffekten im Filter.

Das im Zusammenhang mit dem ersten erfindungsgemäßen Filtermaterial zum ersten Granulat Gesagte gilt gleichermaßen auch für das erste Granulat des zweiten erfindungsgemäßen Filtermaterials.

Das im Zusammenhang mit dem ersten erfindungsgemäßen Filtermaterial zum zweiten Granulat Gesagte gilt gleichermaßen auch für das zweite Granulat des zweiten erfindungsgemäßen Filtermaterials.

Ein Verfahren zur Herstellung eines erfindungsgemäßen Filtermaterials umfasst mindestens die Schritte:
a. Bereitstellen eines ersten Granulats enthaltend Calciumcarbonat und eines zweiten Granulats enthaltend Magnesiumoxid, wobei das erste und das zweite Granulat, jeweils unabhängig voneinander, eine Schüttdichte von 1,00 bis 1,40 t/m³ aufweisen;
b. Mischen des ersten und zweiten Granulats zur Herstellung des Filtermaterials.

Mit dem Verfahren lässt sich ein homogenes und gut durchmischtes Filtermaterial erhalten.

Gemäß einer Option Verfahrens erfolgt das Mischen in Verfahrensschritt b. in einem Mischer ausgewählt aus der Gruppe bestehend aus einem rotierbarer Trommelmischer, einem Trogmischer, einem Tellermischer und einem mechanischen Rührmischer. Mit den genannten Mischern kann ein besonders homogenes Filtermaterial erhalten werden. Als besonders gut geeignet für das Mischen des ersten und zweiten Granulats hat sich hierbei der rotierbare Trommelmischer herausgestellt.

Das im Zusammenhang mit dem ersten erfindungsgemäßen Filtermaterial zum ersten Granulat Gesagte gilt gleichermaßen auch für das erste Granulat des erfindungsgemäßen Verfahrens zur Herstellung des Filtermaterials.

Das im Zusammenhang mit dem ersten erfindungsgemäßen Filtermaterial zum zweiten Granulat Gesagte gilt gleichermaßen auch für das zweite Granulat des erfindungsgemäßen Verfahrens zur Herstellung des Filtermaterials.

Die Erfindung betrifft ferner einen Filter enthaltend das erfindungsgemäße Filtermaterial.

Gemäß einer bevorzugten Ausführungsform des erfindungsgemäßen Filters umfasst der Filter mindestens eine erste und eine zweite Schicht, wobei die erste Schicht ein Füllmaterial und die zweite Schicht das erfindungsgemäße Filtermaterial umfasst. Auf diese Weise wird eine besonders ökonomische Wasseraufbereitung ermöglicht. Zudem sorgt die Füllmaterialschicht dafür, dass die Filtermaterialschicht besonders stabil ist und nicht aufgewirbelt wird.

Als Füllmaterial können grundsätzlich sämtliche gängigen, dem Fachmann bekannten Füllstoffe eingesetzt werden. Als besonders gut geeignet haben sich hierbei Füllmaterial ausgewählt aus Stützkies, Sand, Kieselgur, Kieselgel, Molekularsieb, Zeolith, Zellstoff, Zellulosederivate, Kohlenstofffasern, Keramik, Kunstharz, Gesteinsmehl, Glasfaser, Silikate, Glaskugeln und Mischungen davon herausgestellt. Diese Füllmaterialien weisen hervorragende Eigenschaften für den Einsatz in einem Filter zur Aufbereitung von Trinkwasser auf.

Gemäß einer bevorzugten Ausführungsform des erfindungsgemäßen Filters weist das Füllmaterial eine Korngruppe von 0,1 bis 12 mm, vorzugsweise von 0,5 bis 10 mm, weiter bevorzugt von 1 bis 8 mm oder besonders bevorzugt von 2 bis 6 mm, mit einem Unterkornanteil von weniger als 15 Gew.%, vorzugsweise von maximal 10 Gew.%, und einem Überkornanteil von weniger als 15 Gew.%, vorzugsweise von maximal 10 Gew.%, auf. Füllmaterialien mit einer solchen Korngruppe haben sich als besonders gut geeignete Materialien für den Einsatz in Filtern zur Trinkwasseraufbereitung herausgestellt. Bei einer solchen Korngruppe kann das Wasser gleichmäßig und konstant durch das Füllmaterial durchfließen.

Gemäß einer weiteren bevorzugten Ausführungsform der Erfindung weist der Filter einen Durchmesser von 100 bis 3500 mm und/oder eine Höhe von 500 bis 10000 mm auf. Als besonders gut geeignet für die Wasseraufbereitung hat sich hierbei ein Filter mit einem Durchmesser von 200 bis 2000 mm herausgestellt. Eine besonders bevorzugte Höhe des Filters beträgt 2000 bis 4000 mm. Bei diesen Ausmaßen ist der Filter besonders gut geeignet für die Trinkwasseraufbereitung und kann eine zeit- und kostengünstige Wasseraufbereitung sicherstellen.

Das im Zusammenhang mit dem ersten erfindungsgemäßen Filtermaterial zum ersten Granulat Gesagte gilt gleichermaßen auch für das erste Granulat des Filtermaterials enthalten im erfindungsgemäßen Filter.

Das im Zusammenhang mit dem ersten erfindungsgemäßen Filtermaterial zum zweiten Granulat Gesagte gilt gleichermaßen auch für das zweite Granulat des Filtermaterials enthalten im erfindungsgemäßen Filter.

Die Erfindung betrifft ferner die Verwendung des erfindungsgemäßen Filtermaterials zur Behandlung von Wasser, vorzugsweise zur Entsäuerung und/oder Remineralisierung von Wasser. Besonders bevorzugt ist hierbei die Verwendung des erfindungsgemäßen Filtermaterials zur Entsäuerung und/oder Remineralisierung von Trinkwasser.

Zudem betrifft die Erfindung die Verwendung des erfindungsgemäßen Filters zur Behandlung von Wasser, vorzugsweise zur Entsäuerung und/oder Remineralisierung von Wasser. Besonders bevorzugt ist hierbei die Verwendung des erfindungsgemäßen Filters zur Entsäuerung und/oder Remineralisierung von Trinkwasser.

Das im Zusammenhang mit dem ersten erfindungsgemäßen Filtermaterial zum ersten Granulat Gesagte gilt gleichermaßen auch für das erste Granulat des Filtermaterials der erfindungsgemäßen Verwendungen.

Das im Zusammenhang mit dem ersten erfindungsgemäßen Filtermaterial zum zweiten Granulat Gesagte gilt gleichermaßen auch für das zweite Granulat des Filtermaterials der erfindungsgemäßen Verwendungen.

Ferner betrifft die Erfindung ein Wasseraufbereitungsverfahren, insbesondere zur Trinkwasseraufbereitung, mindestens umfassend die Schritte
a. Bereitstellen eines Filters enthaltend ein Filtermaterial, welches ein erstes Granulat enthaltend Calciumcarbonat und ein zweites Granulat enthaltend Magnesiumoxid umfasst, wobei das erste und das zweite Granulat, jeweils unabhängig voneinander, eine Schüttdichte von 1,00 bis 1,40 t/m³ aufweisen und das Filtermaterial das erste Granulat in einer Menge von 55 bis 85 Gew. % enthält bezogen auf die Summe der Mengen von erstem und zweiten Granulat,
b. Einführen von Wasser in den Filter,
c. In Kontakt bringen des eingeführten Wassers mit dem Filtermaterial,
d. Ausführen des zuvor mit dem Filtermaterial in Kontakt gebrachten Wassers aus dem Filter.

Gemäß einer bevorzugten Ausführungsform des erfindungsgemäßen Wasseraufbereitungsverfahrens wird das Wasser mit einer Geschwindigkeit von 5 bis 30 m/h, vorzugsweise von 8 bis 20 m/h oder besonders bevorzugt von 10 bis 15 m/h, durch den Filter gebracht. Auf diese Weise kann ein besonders effizientes Wasseraufbereitungsverfahren gefahren werden, das aufbereitetes Wasser mit einer hervorragenden Qualität bereitstellt.

Gemäß einer weiteren bevorzugten Ausführungsform beträgt die Kontaktzeit des Wassers mit dem Filtermaterial in Verfahrensschritt c. von 1 bis 30 min, vorzugsweise von 5 bis 15 min oder besonders bevorzugt von 6 bis 10 min. Diese Kontaktzeit hat sich als hinreichend für die Wasseraufbereitung herausgestellt und ermöglicht gleichzeitig einen hohen Wasserdurchsatz.

Gemäß einer weiteren bevorzugten Ausführungsform des erfindungsgemäßen Wasseraufbereitungsverfahrens wird Filtermaterial in den Filter nachgefüllt, nachdem 5 bis 15 %, insbesondere 8 bis 10 %, des für das Aufbereitungsziel benötigten Filtermaterialvolumens, das heißt des ursprünglich in den Filter eingebrachten Filtermaterials, verbraucht sind. Das Nachfüllvolumen an Filtermaterial berechnet sich vorzugsweise aus der Differenz des für das Aufbereitungsziel benötigten Filtermaterialvolumens und dem Volumen des sich zum Zeitpunkt der Nachfüllung im Filter befindlichen Filtermaterials. Auf diese Weise wird eine langfristig stabile Wasseraufbereitung gewährleistet.

Um eine Verschlammung des Filters durch Verunreinigungen aus dem Rohwasser zu vermeiden, hat sich, gemäß einer bevorzugten Ausführungsform, das Spülen des Filters enthaltend das erfindungsgemäße Filtermaterial als vorteilhaft herausgestellt. Gemäß einer Ausführungsform wird der Filter vor dem in Kontakt bringen mit Wasser in Verfahrensschritt b. für 1 bis 30 min, vorzugsweise für in etwa 10 min, mit einem Luft-Wasser-Gemisch und abschließend mit Wasser gespült.

Das im Zusammenhang mit dem ersten erfindungsgemäßen Filtermaterial zum Filtermaterial Gesagte gilt gleichermaßen auch für das im erfindungsgemäßen Wasseraufbereitungsverfahren eingesetzte Filtermaterial.

Das im Zusammenhang mit dem ersten erfindungsgemäßen Filtermaterial zum ersten Granulat Gesagte gilt gleichermaßen auch für das erste Granulat des erfindungsgemäßen Wasseraufbereitungsverfahrens.

Das im Zusammenhang mit dem ersten erfindungsgemäßen Filtermaterial zum zweiten Granulat Gesagte gilt gleichermaßen auch für das zweite Granulat des erfindungsgemäßen Wasseraufbereitungsverfahrens.

Die Erfindung wird im Folgenden durch ein Beispiel näher erläutert, welches jedoch nur der Veranschaulichung dient und nicht limitierend ist.

### Beispiel

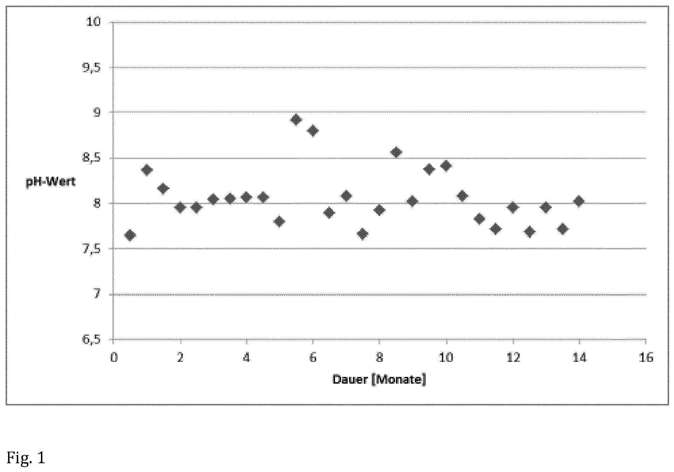

- Fig. 1: Figur 1 zeigt den pH-Wert von Wasser, welches mit dem erfindungsgemäßen Filtermaterial behandelt wurde

Ein Filter mit einem Durchmesser von 300 mm und einer Höhe von 3000 mm wurde zunächst mit 34 kg Stützkies (Höhe 300 mm) als Füllmaterial mit einer Korngruppe von 2,0 bis 3,15 mm (Überkorn- und Unterkornanteil weniger als 10 Gew.%) gefüllt. Anschließend wurden 40 kg Filtermaterial (Höhe 500 mm) in den Filter eingefüllt. Das Filtermaterial setzte sich dabei aus 26,7 kg eines ersten Granulats (Akdolit^{®} Hydro-Calcit C G) enthaltend zirka 97 Gew.% Calciumcarbonat, bezogen auf das Trockengewicht des ersten Granulats, und 13,3 kg eines zweiten Granulats (Akdolit^{®} Hydrolit-MG) enthaltend zirka 95 Gew.% Magnesiumoxid, bezogen auf das Trockengewicht des zweiten Granulats, zusammen.

Der befüllte Filter wurde dann für 10 min mit Rohwasser gespült, um eine Verschlammung des Filters zu vermeiden.

Anschließend wurde Rohwasser mit einer Temperatur von etwa 9 °C, einem pH-Wert von etwa 7,25 und einer Basekapazität bis pH 8,2 (K_{B 8,2}) von 0,2 mmol/l und einer Säurekapazität bis pH 4,3 (K_{S 4,3}) von 1,6 mmol/l mit einer Wasserdurchflussgeschwindigkeit von 0,3 bis 0,6 m³/h durch den Filter gepumpt. Die tägliche Laufzeit betrug hierbei von 5 bis 10 Stunden. Nach einem Aufbereitungsvolumen an Wasser von etwa 100 m³ wurden 10 kg des oben beschrieben Filtermaterials zu dem bereits in den Filter eingebrachten Filtermaterial hinzugegeben. Anschließend wurde der aufgefüllte Filter erneut für etwa 10 Minuten, wie oben beschrieben, gespült.

Nach einem Gesamtaufbereitungsvolumen an Wasser von 600 m³ wurde der Filter ausgeleert und mit frischem Stützkies (10 kg, Korngruppe 3,15 bis 5,6 mm, Überkorn- und Unterkornanteil weniger als 10 Gew.%; Höhe im Filter 300 mm) und frischem Filtermaterial (19,5 kg Gesamt; 13 kg Akdolit^{®} Hydro-Calcit C G und 6,5 kg Akdolit^{®} Hydrolit-Mg) neu befüllt und für 6 Minuten mit Rohwasser gespült. Anschließend wurde das Rohwasser wieder mit einer Wasserdurchflussgeschwindigkeit von 0,3 bis 0,6 m³/h für 5 bis 10 Stunden täglich durch den Filter gepumpt. Eine Nachfüllung erfolgte, wenn das Aufbereitungsziel von pH 7,7 im Filtrat unterschritten wurde.

Das behandelte Wasser wurde regelmäßig bezüglich des pH-Werts, der Aufhärtung und der Trübung geprüft. Wie der Figur 1 zu entnehmen ist, lag der pH-Wert des behandelten Wassers über die gesamte Dauer zwischen 7,5 und 9 und somit deutlich von den unteren und oberen Grenzwerten für Trinkwasser gemäß Trinkwasserverordnung entfernt. Hierbei blieb das im Filter befindliche Filtermaterial für die Entsäuerung des Wassers auch über die Dauer von mehreren Monaten ausreichend aktiv. Gleichzeitig war die Aktivität des Filtermaterials zu keinem Zeitpunkt zu hoch, sondern blieb über den gesamten Testzeitraum stabil. Zudem konnten keine wesentlichen Ausschläge beim pH-Wert beobachtet werden.

Die Aufhärtung des Wassers wurde in regelmäßigen Abständen (in etwa alle zwei Wochen) geprüft. Die Werte für die Calcium- und Magnesiumionen wurden mittels Ionenchromatographie gemäß DIN EN 14911:1999 festgestellt, die Werte für die Hydrogencarbonat-Konzentration mittels Titrimetrie gemäß DIN 38409-H7:2005. Die theoretischen Werte liegen bei Ca²⁺:Mg²⁺:HCO₃⁻ = 1 : 1 : 4, die gemessenen Werte bei Ca²⁺:Mg²⁺:HCO₃⁻ = 1,0 : 1,4 : 4,6. Die Magnesiumoxid-Komponente reagierte folglich etwas schneller als die Calciumcarbonat-Komponente. Insgesamt lagen die gemessenen Werte allerdings in guter Übereinstimmung mit den erwarteten theoretischen Aufhärtungswerten.

Die Trübung des behandelten Wassers wurde mittels Nephelometrie in regelmäßigen Abständen von etwa 2 Wochen geprüft. Die Trübung des behandelten Wassers wurde gemäß Norm DIN EN ISO 7027:2000 geprüft. Das behandelte Wasser wies bei der Großzahl der Messungen eine sehr geringe Trübung von unter 0,1 NTU auf. Bei keiner der Messungen wurde der Trübungsgrenzwert der Trinkwasserverordnung von 1 NTU überschritten.

Das mit dem erfindungsgemäßen Filtermaterial behandelte Rohwasser erfüllte folglich die Qualitätsanforderungen gemäß der Trinkwasserverordnung. Das erfindungsgemäße Filtermaterial eignet sich somit hervorragend für die Aufbereitung, insbesondere die Entsäuerung und/oder Remineralisierung, von Trinkwasser.

## Patentansprüche

1. Filtermaterial zur Wasseraufbereitung umfassend
- ein erstes Granulat enthaltend Calciumcarbonat,
- ein zweites Granulat enthaltend Magnesiumoxid,
wobei das erste und das zweite Granulat, jeweils unabhängig voneinander, eine Schüttdichte von 1,00 bis 1,40 t/m³ aufweisen und das Filtermaterial das erste Granulat in einer Menge von 55 bis 85 Gew.%, bezogen auf die Summe der Mengen von erstem und zweitem Granulat, enthält.

2. Filtermaterial nach Anspruch 1, **dadurch gekennzeichnet, dass** das erste und/oder das zweite Granulat, jeweils unabhängig voneinander, eine Schüttdichte von 1,10 bis 1,38 t/m³, insbesondere von 1,15 bis 1,35 t/m³ oder von 1,20 bis 1,32 t/m³, aufweisen.

3. Filtermaterial nach einem der Ansprüche 1 oder 2, **dadurch gekennzeichnet, dass** das Filtermaterial das erste Granulat in einer Menge von 60 bis 80 Gew.%, von 62 bis 75 Gew.%, von 65 bis 70 Gew.% oder von 66 bis 68 Gew.%, bezogen auf die Summe der Mengen von erstem und zweitem Granulat, enthält.

4. Filtermaterial nach einem der vorstehenden Ansprüche, **dadurch gekennzeichnet, dass** das erste Granulat Calciumcarbonat in einer Menge von mindestens 90 Gew.%, insbesondere mindestens 93 Gew.%, mindestens 95 Gew.% oder mindestens 96 Gew.%, bezogen auf das Gesamttrockengewicht des ersten Granulats, enthält.

5. Filtermaterial nach einem der vorstehenden Ansprüche, **dadurch gekennzeichnet, dass** das zweite Granulat Magnesiumoxid in einer Menge von mindestens 80 Gew.%, insbesondere mindestens 85 Gew.% oder mindestens 90 Gew.%, bezogen auf das Gesamttrockengewicht des zweiten Granulats, enthält.

6. Filtermaterial nach einem der vorstehenden Ansprüche, **dadurch gekennzeichnet, dass** das erste Granulat Magnesiumoxid in einer Menge von höchstens 1 Gew.%, insbesondere von höchstens 0,5 Gew.%, bezogen auf das Gesamttrockengewicht des ersten Granulats, aufweist und/oder das zweite Granulat Calciumcarbonat in einer Menge von höchstens 3 Gew.%, insbesondere höchstens 2 Gew.%, höchstens 1 Gew.% oder 0,5 Gew.%, bezogen auf das Gesamttrockengewicht des zweiten Granulats, enthält.

7. Filtermaterial nach einem der vorstehenden Ansprüche, **dadurch gekennzeichnet, dass** das erste und das zweite Granulat, jeweils unabhängig voneinander, ein im Wesentlichen kugelförmiges Granulat ist.

8. Filtermaterial nach einem der vorstehenden Ansprüche, **dadurch gekennzeichnet, dass** das erste Granulat eine Korngruppe von 0,01 bis 8 mm, insbesondere von 0,1 bis 6 mm, von 0,3 bis 4 oder von 0,5 bis 3,2 mm, mit einem Unterkornanteil von weniger als 10 Gew.%, insbesondere maximal 2 Gew.%, und mit einem Überkornanteil von weniger als 10 Gew.%, insbesondere maximal 7 Gew.%, aufweist.

9. Filtermaterial nach einem der vorstehenden Ansprüche, **dadurch gekennzeichnet, dass** das zweite Granulat eine Korngruppe von 0,01 bis 12 mm, insbesondere von 0,1 bis 10 mm, von 0,2 bis 5 mm oder von 0,5 bis 2,5 mm, mit einem Unterkornanteil von weniger als 10 Gew.%, insbesondere maximal 3 Gew.%, und mit einem Überkornanteil von weniger als 10 Gew.%, insbesondere maximal 9 Gew.%, aufweist.

10. Filtermaterial zur Wasseraufbereitung umfassend
- 55 bis 85 Gew.% eines ersten Granulats enthaltend Calciumcarbonat,
- 15 bis 45 Gew.% eines zweiten Granulats enthaltend Magnesiumoxid, jeweils bezogen auf die Summe der Mengen von erstem und zweitem Granulat, wobei das erste und das zweite Granulat, jeweils unabhängig voneinander, eine Schüttdichte von 1,00 bis 1,40 t/m³ aufweisen.

11. Filtermaterial nach Anspruch 10, **dadurch gekennzeichnet, dass** das erste und das zweite Granulat wie in einem der Ansprüche 2 und/oder 4 bis 9 definiert ist.

12. Filter enthaltend ein Filtermaterial nach einem der Ansprüche 1 bis 11.

13. Filter nach Anspruch 12, **dadurch gekennzeichnet, dass** der Filter mindestens eine erste und eine zweite Schicht umfasst, wobei die erste Schicht ein Füllmaterial und die zweite Schicht ein Filtermaterial nach einem der Ansprüche 1 bis 11 umfasst.

14. Filter nach Anspruch 13, **dadurch gekennzeichnet, dass** das Füllmaterial ausgewählt ist aus Stützkies, Sand, Kieselgur, Kieselgel, Molekularsieb, Zeolith, Zellstoff, Zellulosederivate, Kohlenstofffasern, Keramik, Kunstharz, Gesteinsmehl, Glasfaser, Silikate, Glaskugeln und Mischungen davon und/oder das Füllmaterial eine Korngruppe von 0,1 bis 12 mm, insbesondere von 0,5 bis 10 mm, von 1 bis 8 mm oder von 2 bis 6 mm, mit einem Unterkornanteil von weniger als 15 Gew.%, insbesondere maximal 10 Gew.%, und einem Überkornanteil von weniger als 15 Gew.%, insbesondere maximal 10 Gew.%, aufweist.

15. Filter nach einem der Ansprüche 12 bis 14, **dadurch gekennzeichnet, dass** der Filter einen Durchmesser von 100 bis 3500 mm und/oder eine Höhe von 500 bis 10000 mm aufweist.

16. Verwendung eines Filtermaterials nach einem der Ansprüche 1 bis 11 und/oder eines Filters nach einem der Ansprüche 12 bis 15 zur Behandlung von Wasser, insbesondere zur Entsäuerung und/oder Remineralisierung von Wasser.

## Claims

1. Filter material for water treatment comprising:
- a first granulate containing calcium carbonate,
- a second granulate containing magnesium oxide,
wherein the first and the second granulate each independently have a bulk density of 1.00 to 1.40 t/m³ and the filter material contains the first granulate in a quantity of 55 to 85% by weight, in relation to the sum of the quantities of the first and second granulate.

2. Filter material according to claim 1, **characterized in that** the first and/or the second granulate each independently has a bulk density of 1.10 to 1.38 t/m³, in particular 1.15 to 1.35 t/m³, or 1.20 to 1.32 t/m³.

3. Filter material according to one of claims 1 or 2, **characterized in that** the filter material contains the first granulate in a quantity of 60 to 80% by weight, of 62 to 75% by weight, of 65 to 70% by weight, or of 66 to 68% by weight, in relation to the sum of the quantities of the first and second granulate.

4. Filter material according to one of the preceding claims, **characterized in that** the first granulate contains calcium carbonate in a quantity of at least 90% by weight, in particular at least 93% by weight, at least 95% by weight or at least 96% by weight, in relation to the total dry weight of the first granulate.

5. Filter material according to one of the preceding claims, **characterized in that** the second granulate contains magnesium oxide in a quantity of at least 80% by weight, in particular at least 85% by weight, or at least 90% by weight, in relation to the total dry weight of the second granulate.

6. Filter material according to one of the preceding claims, **characterized in that** the first granulate contains magnesium oxide in a quantity of at most 1% by weight, in particular at most 0.5% by weight, in relation to the total dry weight of the first granulate, and/or the second granulate contains calcium carbonate in a quantity of at most 3% by weight, in particular at most 2% by weight, at most 1% by weight or 0.5% by weight, in relation to the total dry weight of the second granulate.

7. Filter material according to one of the preceding claims, **characterized in that** the first and second granulate are each independently an essentially spherical granulate.

8. Filter material according to one of the preceding claims, **characterized in that** the first granulate has a particle size fraction of 0.01 to 8 mm, in particular 0.1 to 6 mm, 0.3 to 4, or 0.5 to 3.2 mm, with an undersize fraction of less than 10% by weight, in particular a maximum of 2% by weight, and with an oversize fraction of less than 10% by weight, in particular a maximum of 7% by weight.

9. Filter material according to one of the preceding claims, **characterized in that** the second granulate has a particle size fraction of 0.01 to 12 mm, in particular 0.1 to 10 mm, 0.2 to 5 mm, or 0.5 to 2.5 mm, with an undersize fraction of less than 10% by weight, in particular a maximum of 3% by weight, and with an oversize fraction of less than 10% by weight, in particular a maximum of 9% by weight.

10. Filter material for water treatment comprising:
- 55 to 85% by weight of a first granulate containing calcium carbonate,
- 15 to 45% by weight of a second granulate containing magnesium oxide, in each case in relation to the sum of the quantities of the first and second granulate, the first and second granulate each independently having a bulk density of 1.00 to 1.40 t/m³.

11. Filter material according to claim 10, **characterized in that** the first and second granulates are defined as in one of claims 2 and/or 4 to 9.

12. Filter containing a filter material according to one of claims 1 to 11.

13. Filter according to claim 12, **characterized in that** the filter comprises at least a first and a second layer, wherein the first layer comprises a filler material and the second layer comprises a filter material according to any one of claims 1 to 11.

14. Filter according to claim 13, **characterized in that** the filler material is selected from supporting gravel, sand, kieselguhr, silica gel, molecular sieve, zeolite, cellulose, cellulose derivatives, carbon fibers, ceramic, synthetic resin, rock flour, glass fiber, silicates, glass spheres and mixtures thereof and/or **in that** the filler material has a particle size fraction of 0.1 to 12 mm, in particular 0.5 to 10 mm, 1 to 8 mm, or 2 to 6 mm, with an undersize fraction of less than 15% by weight, in particular a maximum of 10% by weight, and an oversize fraction of less than 15% by weight, in particular a maximum of 10% by weight.

15. Filter according to one of claims 12 to 14, **characterized in that** the filter has a diameter of 100 to 3500 mm and/or a height of 500 to 10000 mm.

16. Use of a filter material according to one of claims 1 to 11 and/or a filter according to one of claims 12 to 15 for treatment of water, in particular for deacidification and/or remineralization of water.

## Revendications

1. Matériau filtrant pour le traitement de l'eau comprenant
- un premier granulat contenant du carbonate de calcium,
- un second granulat contenant de l'oxyde de magnésium,
dans lequel le premier et le second granulat présentent, respectivement indépendamment l'un de l'autre, une densité apparente allant de 1,00 à 1,40 t/m³ et le matériau filtrant contient le premier granulat en une quantité allant de 55 à 85 % en poids, par rapport à la somme des quantités des premier et second granulats.

2. Matériau filtrant selon la revendication 1, **caractérisé en ce que** le premier et/ou le second granulat présentent, respectivement indépendamment l'un de l'autre, une densité apparente allant de 1,10 à 1,38 t/m³, en particulier de 1,15 à 1,35 t/m³ ou de 1,20 à 1,32 t/m³.

3. Matériau filtrant selon l'une des revendications 1 ou 2, **caractérisé en ce que** le matériau filtrant contient le premier granulat en une quantité allant de 60 à 80 % en poids, de 62 à 75 % en poids, de 65 à 70 % en poids ou de 66 à 68 % en poids, par rapport à la somme des quantités des premier et second granulats.

4. Matériau filtrant selon l'une des revendications précédentes,
**caractérisé en ce que** le premier granulat contient du carbonate de calcium en une quantité d'au moins 90 % en poids, en particulier d'au moins 93 % en poids, d'au moins 95 % en poids ou d'au moins 96 % en poids, par rapport au poids sec total du premier granulat.

5. Matériau filtrant selon l'une des revendications précédentes,
**caractérisé en ce que** le second granulat contient de l'oxyde de magnésium en une quantité d'au moins 80 % en poids, en particulier d'au moins 85 % en poids ou d'au moins 90 % en poids, par rapport au poids sec total du second granulat.

6. Matériau filtrant selon l'une des revendications précédentes, **caractérisé en ce que** le premier granulat contient de l'oxyde de magnésium en une quantité d'au plus 1 % en poids, en particulier d'au plus 0,5 % en poids, par rapport au poids sec total du premier granulat, et/ou le second granulat contient du carbonate de calcium en une quantité d'au plus 3 % en poids, en particulier d'au plus 2 % en poids, d'au plus 1 % en poids ou 0,5 % en poids, par rapport au poids sec total du second granulat.

7. Matériau filtrant selon l'une des revendications précédentes,
**caractérisé en ce que** le premier et le second granulat sont, respectivement indépendamment l'un de l'autre, des granulats sensiblement sphériques.

8. Matériau filtrant selon l'une des revendications précédentes, **caractérisé en ce que** le premier granulat présente un groupe de grains allant de 0,01 à 8 mm, en particulier de 0,1 à 6 mm, de 0,3 à 4 ou de 0,5 à 3,2 mm, avec une proportion de fines inférieure à 10 % en poids, en particulier de 2 % en poids au maximum, et avec une proportion de gros grains inférieure à 10 % en poids, en particulier de 7 % en poids au maximum.

9. Matériau filtrant selon l'une des revendications précédentes, **caractérisé en ce que** le second granulat présente un groupe de grains allant de 0,01 à 12 mm, en particulier de 0,1 à 10 mm, de 0,2 à 5 mm ou de 0,5 à 2,5 mm, avec une proportion de fines inférieure à 10 % en poids, en particulier de 3 % en poids au maximum, et avec une proportion de gros grains inférieure à 10 % en poids, en particulier de 9 % en poids au maximum.

10. Matériau filtrant pour le traitement de l'eau comprenant
- 55 à 85 % en poids d'un premier granulat contenant du carbonate de calcium,
- 15 à 45 % en poids d'un second granulat contenant de l'oxyde de magnésium, respectivement par rapport à la somme des quantités des premier et second granulats, dans lequel le premier et le second granulat présentent, respectivement indépendamment l'un de l'autre, une densité apparente allant de 1,00 à 1,40 t/m³.

11. Matériau filtrant selon la revendication 10, **caractérisé en ce que** le premier et le second granulat sont tels que définis dans l'une des revendications 2 et/ou 4 à 9.

12. Filtre contenant un matériau filtrant selon l'une des revendications 1 à 11.

13. Filtre selon la revendication 12, **caractérisé en ce que** le filtre comprend au moins une première et une seconde couche, dans lequel la première couche comprend un matériau de remplissage et la seconde couche comprend un matériau filtrant selon l'une des revendications 1 à 11.

14. Filtre selon la revendication 13, **caractérisé en ce que** le matériau de remplissage est choisi parmi gravier de support, sable, terre de diatomée, gel de silice, tamis moléculaire, zéolite, cellulose, dérivés de cellulose, fibres de carbone, céramique, résine synthétique, poudre de roche, fibres de verre, silicates, billes de verre et leurs mélanges et/ou le matériau de remplissage présente un groupe de grains allant de 0,1 à 12 mm, en particulier de 0,5 à 10 mm, de 1 à 8 mm ou de 2 à 6 mm, avec une proportion de fines inférieure à 15 % en poids, en particulier de 10 % en poids au maximum, et une proportion de gros grains inférieure à 15 % en poids, en particulier de 10 % en poids au maximum.

15. Filtre selon l'une des revendications 12 à 14, **caractérisé en ce que** le filtre présente un diamètre allant de 100 à 3 500 mm et/ou une hauteur allant de 500 à 10 000 mm.

16. Utilisation d'un matériau filtrant selon l'une des revendications 1 à 11 et/ou d'un filtre selon l'une des revendications 12 à 15 pour le traitement de l'eau, en particulier pour la désacidification et/ou la reminéralisation de l'eau.
